# EUROPÄISCHE PATENTSCHRIFT

(11) **EP 2 730 906 B1**
(45) Veröffentlichungstag und Bekanntmachung des Hinweises auf die Patenterteilung: **25.09.2019**
(21) Anmeldenummer: 13180250.6
(22) Anmeldetag: 13.08.2013
(51) Int. Cl.: G01M 13/04

(54) **Vorrichtung und Verfahren zur Zustandsüberwachung eines Wälzlagers**
Device and method for monitoring the state of a roller bearing
Dispositif et procédé de surveillance de l'état d'un palier à roulement

(30) Priorität: 07.11.2012 DE 102012220222
(43) Veröffentlichungstag der Anmeldung: 14.05.2014
(73) Patentinhaber: Siemens Aktiengesellschaft, 80333 München (DE)
(72) Erfinder: Werner, Ulrich, 91088 Bubenreuth (DE); Klos, Hans-Henning, 90475 Nürnberg (DE); Müller, Klaus-Dieter, 90425 Nürnberg (DE)

(56) Entgegenhaltungen:
- WO-A2-02/073150
- DE-A1- 10 100 444
- DE-A1- 10 325 801
- DE-A1- 19 963 608

## Beschreibung

Die Erfindung betrifft eine Vorrichtung zur Zustandsüberwachung eines Wälzlagers gemäß dem Oberbegriff des Patentanspruchs 1. Die Erfindung betrifft ferner ein Verfahren zur Schwingungsüberwachung eines Wälzlagers gemäß dem Oberbegriff des Patentanspruchs 7. Die Erfindung ist definiert durch die Ansprüche.

Beim Betrieb von Maschinen und Anlagen ist es von großer Bedeutung, dass der Zeitpunkt zur Durchführung von Wartungen optimal gewählt wird. Wird zu früh eingegriffen, so entstehen unnötige Kosten durch den vorzeitigen Austausch von Komponenten. Wird dagegen zu spät eingegriffen, so wird der Ausfall einer Komponente riskiert, was zum Teil den Ausfall einer ganzen Anlage bedeuten kann. Vor allem die Lager einer Maschine gehören zu den Verschleißteilen, die regelmäßig gewartet bzw. bei auftretendem Verschleiß ausgetauscht werden müssen. Defekte Lager ziehen häufig große Folgeschäden nach sich. Um den optimalen Zeitpunkt, an dem ein Lager, insbesondere ein Wälzlager, ausgetauscht werden muss, zu bestimmen, sind unterschiedliche Sensorsysteme bekannt, mit denen Verschleißerscheinungen und/oder Schäden am Lager detektiert werden können.

In diesem Zusammenhang ist es bekannt, eine Zustandsüberwachung mit integrierter Schwingungsanalyse durchzuführen, um eine zeitlich präzise und robuste Alarmierung und somit eine zeitgerechte Identifikation gefährlicher Betriebszustände und die Einleitung entsprechender Gegenmaßnahmen zu ermöglichen. Vielfach werden Lager im Frequenzbereich von 2 Hz bis 10 kHz im linearen Frequenzbereich eines Sensors mittels FFT-Analyse und Eingabe mechanischer Eigenschaften, insbesondere unter Berücksichtigung der Wälzlagergeometrie, sowie der Drehzahl auf Schadensfrequenzen überwacht. Eine andere technische Lösung sieht vor, dass mit einem resonanten Schwingungsaufnehmer im Ultraschallbereich durch Schadensmuster hervorgerufene zeitlich periodische Schwingungen, so genannte Stoßimpulse, analysiert werden. Beide zuvor genannten Verfahren sind dazu geeignet, den Ist-Zustand eines Lagers zu ermitteln. Um den Zustand eines Lagers zu visualisieren, sind in diesem Zusammenhang Hilfsmittel bekannt, die eine Anzeige beinhalten, ob ein Lager noch intakt ist oder bereits Schäden aufweist.

In Abhängigkeit des detektierten Lagerzustands wird somit entschieden, ob eine Anlage noch betrieben werden kann oder außer Betrieb genommen werden muss. Problematisch an diesen technischen Lösungen ist allerdings, dass lediglich der Ist-Zustand eines Lagers berücksichtigt wird. Dagegen ist es nur eingeschränkt möglich, beispielsweise im Vorfeld einer möglichen Anlagenabschaltung, Informationen über den Lagerzustand zu erhalten bzw. Messungen durchzuführen, die eine Aussage darüber zulassen, wie lange ein Lager noch problemlos betreibbar ist.

Beispielsweise offenbart die DE 101 00 444 A1 eine Vorrichtung, um Schwingungen und die dazu gehörenden Geräusche technischer Einrichtungen zu erfassen und auszuwerten.

Ferner offenbart die WO 02/073150 A2 ein System und ein Verfahren zum Analysieren von Vibrationssignalen.

Schließlich offenbart die DE 199 63 608 A1 einen Breitband-Vibrationssensor und die DE 103 25 801 A1 einen Schallaufnehmer.

Ausgehend von den bekannten technischen Lösungen sowie dem zuvor geschilderten Problem liegt der Erfindung die Aufgabe zugrunde, die Überwachung eines Lagers, insbesondere eines Wälzlagers, derart weiterzubilden, dass präventive Aussagen über eine in Zukunft liegende, erforderliche Wartung oder einen Austausch eines Lagers mit großer Sicherheit durchgeführt werden können. Hierbei soll insbesondere sichergestellt werden, dass Wartungen weder zu früh noch zu spät erfolgen, um einen möglichst wirtschaftlichen Betrieb einer Anlage zu ermöglichen. Des Weiteren soll das anzugebende Verfahren mit bekannter Sensortechnik auszuführen sein und auch bei bestehenden Anlagen mit verhältnismäßig einfachen Mitteln nachrüstbar sein.

Die vorstehend erläuterte Aufgabe wird mit einer Vorrichtung gemäß Anspruch 1 sowie einem Verfahren nach Anspruch 7 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung beruht auf einer Vorrichtung zur Zustandsüberwachung eines Wälzlagers, die einen Schwingungssensor aufweist, durch den während eines Betriebs des Lagers auftretende Schwingung detektierbar sind und in Abhängigkeit der detektierten Schwingungen ein erstes Signal generierbar ist. Ferner ist eine Diagnoseelektronik vorgesehen, durch die unter Zugrundelegung des vom Schwingungssensor generierten ersten Signals und von wenigstens einem in der Diagnoseelektronik hinterlegten Grenzwert eine Information über einen Lagerzustand ausgebbar ist. Erfindungsgemäß ist eine derartige Vorrichtung zur Zustandsüberwachung eines Wälzlagers derart weitergebildet worden, dass zusätzlich zum Schwingungssensor ein Schallemissionssensor vorgesehen ist, durch den Lagergeräusche, die bei einer wenigstens bereichsweise plastischen Verformung des Lagers entstehen, aufnehmbar sind und dass unter Berücksichtigung der aufgenommenen Geräusche ein zweites Signal an die Diagnoseelektronik übertragbar ist. Mit anderen Worten ist der Schallemissionssensor dazu ausgebildet, Schallemissionssignale im Bereich des Lagers, die aufgrund plastischer Werkstoffverformung in diesem Bereich entstehen, aufzunehmen und ein hierauf basierendes zweites Signal an die Diagnoseelektronik zu übertragen. Es ist in diesem Zusammenhang vorgesehen, dass die Diagnoseelektronik derart ausgeführt ist, dass die hinterlegten Grenzwerte unter Berücksichtigung des empfangenen zweiten Signals veränderbar sind und somit die Ausgabe einer Information über den Lagerzustand in Abhängigkeit der vom Schallemissionssensor aufgenommenen Lagergeräusche erfolgt, wobei der Schallemissionssensor ab einer Frequenz von 80 kHz besonders empfindlich ist.

Die erfindungsgemäße Zustandsüberwachung eines Wälzlagers zeichnet sich somit dadurch aus, dass zusätzlich zu einem Sensor für die Schwingungsüberwachung des Lagers ein Schallemissionssensor, d.h. ein so genannter Acoustic-Emission-Sensor, eingesetzt wird. Hierbei ist es grundsätzlich unerheblich, ob man die Schallemissionsmethode mit der Schwingungsüberwachung in einem Frequenzbereich bis ca. 20 kHz, oder mit einer bekannten Stoßimpulsmethode im Resonanzbereich eines Schwingungsaufnehmers kombiniert.

In einer besonderen Ausführungsform der Erfindung ist der Schallemissionssensor als piezoelektrischer Sensor oder als Sensor mit einem mikro-elektrisch-mechanischen System (MEMS) ausgeführt. Gleichgültig welcher Schallemissionssensor verwendet wird, ist es vorteilhaft, wenn der Schallemissionssensor derart gestaltet ist, dass er in einem Frequenzbereich besonders empfindlich ist, in dem der zu überwachende Werkstoff bei plastischer Verformung Schallemissionssignale erzeugt. Die Frequenz der Geräusche, die ein Lager bzw. ein Lagerwerkstoff bei plastischer Verformung erzeugt, hängen von dem jeweils verwendeten Werkstoff ab. In diesem Zusammenhang sieht eine spezielle Weiterbildung der Erfindung vor, dass der verwendete Schallemissionssensor in einem Frequenzbereich zwischen 100 kHz und 130 kHz besonders empfindlich ist. Sofern Stahl als Lagerwerkstoff verwendet wird, was vielfach der Fall ist, sollte der Schallemissionssensor in einem Frequenzbereich über etwa 80 kHz empfindlich sein.

Gemäß einer weiteren speziellen Weiterbildung der Erfindung ist vorgesehen, dass die Diagnoseelektronik derart ausgeführt ist, dass die empfangenen zweiten Signale hinsichtlich ihrer Amplitude und/oder Häufigkeit pro Zeitintervall klassifiziert werden und basierend hierauf ein Kennwert generierbar ist. Besonders vorteilhaft ist es, wenn die von der Diagnoseelektronik empfangenen zweiten Signale hinsichtlich der Anzahl der Impulse pro Zeitintervall, der mittleren Amplitude der Impulse in einem Zeitintervall, der Summe aller Impulsamplituden seit Messbeginn oder der Steigung der Summe aller Impulse seit Messbeginn klassifiziert werden.

Auf der Grundlage der ermittelten Daten wird über eine an die Diagnoseelektronik angebundene Ausgabeeinheit, beispielsweise einen Monitor, eine Anzeige ausgegeben, die Informationen über den Lagerzustand enthält. Vorteilhaft ist es in diesem Zusammenhang, wenn zur Darstellung des Lagerzustandes eine so genannte Ampeldarstellung gewählt wird. Bei einer derartigen Ampeldarstellung wird zwischen drei oder maximal vier verschiedenen Zuständen unterschieden. Die auf vorteilhafte Weise zu unterscheidenden Zustände sind ein Gutzustand (kein Schaden), kleiner bzw. beginnender Schaden, größerer Lagerschaden (einige Millimeter) sowie großer bzw. fortgeschrittener Schaden. Bei der letzten Stufe, also einem großen bzw. fortgeschrittenen Schaden, soll die Maschine, in der das entsprechend beschädigte Lager betrieben wird, möglicherweise sofort abgeschaltet werden, um größere Schäden zu vermeiden. Während bislang zur Ermittlung des Lagerzustandes ausschließlich der Momentanzustand eines Lagers berücksichtigt wurde und eine Ampelanzeige entsprechend eingestellt wurde, ist es mit der erfindungsgemäßen technischen Lösung möglich, zusätzlich die von einem Schallemissionssensor aufgenommenen Schallemissionssignale zu berücksichtigen. Hierbei werden die auf den bekannten Methoden der Zustandsüberwachung von Wälzlagern beruhenden Schwingungsanalysen (FFT, Hüllkurven-FFT, Cepstrum, SPM, Stoßimpulsmethode) verwendet.

Vorteilhaft ist, wenn die Größe der Grenzwerte, beispielsweise des Grenzwerts zwischen dem Gutzustand eines Lagers und einem kleinen bzw. beginnenden Lagerschaden, unter Berücksichtigung der Kennwerte, die durch Auswerten der vom Schallemissionssensor generierten zweiten Signale in der Diagnoseelektronik erzeugt worden sind, angepasst bzw. verändert wird. Treten derartige Schallemissionsimpulse auf und werden diese vom Schallemissionssensor erfasst, so werden die ursprünglich in der Diagnoseelektronik festgelegten Grenzwerte herabgesetzt, da davon auszugehen ist, dass in diesem Moment eine Verschlechterung des Lagerzustands stattfindet, der die Schadenswahrscheinlichkeit vergrößert. Treten besonders hohe und/oder häufig Schallemissionsimpulse am Lager auf, wird der Grenzwert in der Diagnoseelektronik entsprechend stärker herabgesetzt, als bei seltenen Schädigungsereignissen geringer Amplitude.

Treten dagegen keine Schallemissionsimpulse auf, so werden innerhalb der Diagnoseelektronik die hinterlegten Grenzwerte erhöht, da zu diesem Zeitpunkt keine Verschlechterung des Lagerzustandes stattfindet, und somit das Risiko, dass es zu einem Ausfall des Lagers kommt, geringer zu bewerten ist.

In einer vorteilhaften Ausführungsform der Erfindung werden der Schwingungssensor, der in einem niedrigeren Frequenzbereich arbeitet, und der Schallemissionssensor (Acoustic-Emission-Sensor) in einem gemeinsamen Sensorgehäuse, vorzugsweise im Lagerschild einer Maschine, oder separat in der Nähe des zu untersuchenden Lagers angeordnet. Die Auswertung des ersten und des zweiten Signals in der Diagnoseelektronik sowie die Ausgabe einer Information über den Lagerzustand, insbesondere zur Ansteuerung einer Anzeige mit Ampel-Visualisierung, erfolgt auf bevorzugte Weise innerhalb eines Moduls, in dem auch die Sensoren vorgesehen sind.

In einer ganz speziellen Ausführungsform wird im Rahmen der Schwingungsüberwachung eine Drehzahlinformation des Lagers verwendet. Der hierfür benötigte wenigstens eine Drehzahlwert wird vorzugsweise über ein angekoppeltes Netzwerk, beispielsweise Ethernet, Profinet, Profibus o.ä. an die Diagnoseelektronik übertragen. Ebenso ist es denkbar, dass die Diagnoseelektronik oder das Modul, in das die Diagnoseelektronik integriert ist, die Information für die Ampel-Visualisierung über ein derartiges Netzwerk nach außen übertragen wird. Auf vorteilhafte Weise können auch Kennwerte für die Diagnose, zum Beispiel im Alarmfall, über ein geeignetes Netzwerk-Interface ausgelesen werden.

Zusätzlich zu der beschriebenen Vorrichtung betrifft die Erfindung ein Verfahren gemäß dem Oberbegriff des Patentanspruchs 7. Das erfindungsgemäße Verfahren zeichnet sich dadurch aus, dass zusätzlich zur Schwingungsüberwachung mit einem Schallemissionssensor Lagergeräusche, die bei einer wenigstens bereichsweise plastischen Verformung des Lagers entstehen, aufgenommen werden, und dass unter Berücksichtigung der aufgenommenen Geräusche ein zweites Signal generiert und an die Diagnoseelektronik übertragen wird, wobei der Schallemissionssensor ab einer Frequenz von 80 kHz besonders empfindlich ist.

Vorzugsweise werden die empfangenen zweiten Signale in der Diagnoseelektronik entsprechend ihrer Amplitude und/oder ihres Auftretens pro Zeitintervall klassifiziert und auf der Basis der Klassifizierung wenigstens ein Kennwert ermittelt. Bevorzugt wird der Kennwert verwendet, um die in der Diagnoseelektronik hinterlegten Schwingungsgrenzwerte an das Auftreten, die Stärke und/oder die Häufigkeit der vom Schallemissionssensor aufgenommenen Geräusche anzupassen.

Gemäß einer speziellen Weiterbildung des erfindungsgemäßen Verfahrens ist vorgesehen, dass die empfangenen zweiten Signale in der Diagnoseelektronik unter Berücksichtigung einer Anzahl von Impulsen pro Zeitintervall, einer mittleren Amplitude der Impulse für Zeitintervall, einer Summe der Impulsamplituden seit eines Startpunktes einer Messung und/oder einer Steigung der Summe der Impulsamplituden seit eines Startpunktes einer Messung klassifiziert werden und basierend hierauf ein Kennwert erzeugt wird. Der Kennwert wird auf vorteilhafte Weise wiederum verwendet, um die in der Diagnoseelektronik hinterlegten Grenzwerte entsprechend des realen Lagerzustandes zu variieren.

Die erfindungsgemäße Vorrichtung sowie das entsprechende Verfahren zeichnen sich vor allem auch dadurch aus, dass sie mit verhältnismäßig einfachen Mitteln in bestehende Systeme bzw. Anlagen integrierbar sind. Weitere Vorteile sind darin zu sehen, dass gängige Erfahrungen und Normen verwendet werden können und die Grenzwerte, die in der Diagnoseelektronik hinterlegt sind, in Abhängigkeit vom Auftreten der Schallemissionsimpulse lediglich herauf- oder herabgesetzt werden. Somit können bestehende Systeme mit diesem Verfahren auf einfache Weise nachgerüstet werden, und es ergeben sich eine höhere Robustheit und zeitliche Präzision der Aussage über den tatsächlichen Lagerzustand. Sobald das Material im Wälzlager geschädigt wird, wird dessen aktueller Betriebszustand schlechter eingestuft, als wenn keine Schädigung auftritt. Die Einfachheit der Ampel-Visualisierung bleibt trotz Einsatz des erfindungsgemäßen Verfahrens erhalten. Durch die Verwendung eines zusätzlichen Schallemissionssensors wird somit keine zusätzliche Ausgabeeinheit, insbesondere kein zusätzlicher Ampel-Monitor, benötigt und es wird keine Verknüpfung von zwei Ampelsignalen trotz Einsatz unterschiedlicher Sensorsysteme benötigt.

Im Folgenden wird die Erfindung ohne Beschränkung des allgemeinen Erfindungsgedankens anhand von Ausführungsbeispielen und unter Bezugnahme auf die Figuren näher erläutert. Dabei zeigen:
- FIG 1:: Schematische Darstellung eines Wälzlagers mit den daran angeschlossenen Sensorsysteme und einer Diagnoseelektronik sowie
- FIG 2:: Schematische Darstellung eines Wälzlagers mit einem Modul, das Sensorsysteme und eine Diagnoseelektronik umfasst und an ein Netzwerk angebunden ist.

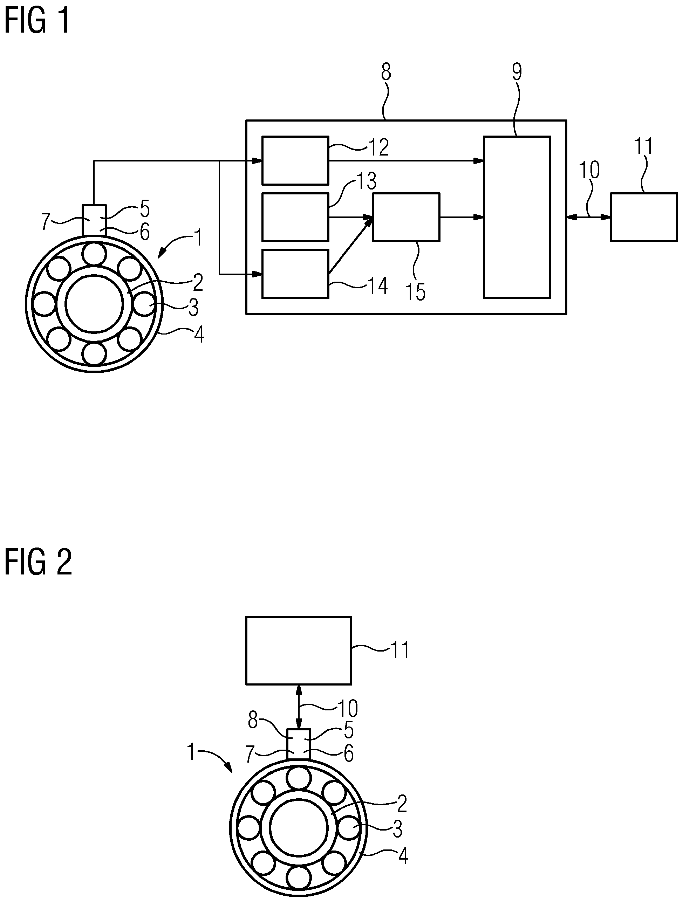

FIG 1 zeigt ein Wälzlager 1, bestehend aus einem Lagerinnenring 2, aus Wälzkörpern(z.B. Lagerkugeln 3) sowie einem Lageraußenring 4. Ferner ist ein Sensormodul 5 vorgesehen, dass sowohl einen Schwingungssensor 6 als auch einen Schallemissionssensor 7, einen sogenannten Acoustic-Emission-Sensor, aufweist. Das Sensormodul 5 ist an eine Diagnoseelektronik 8 angeschlossen, an die die jeweils vom Sensormodul 5 bzw. den darin enthaltenen Sensoren 6, 7 aufgenommenen generierten Signale weitergeleitet werden.

Innerhalb der Diagnoseelektronik 8 erfolgt eine Auswertung der vom Schwingungssensor 6 generierten ersten Signale mit Hilfe einer Schwingungsanalyse 12. Auf der Grundlage der Ergebnisse der Schwingungsanalyse werden Informationen über den Lagerzustand an eine als Ampelmonitor ausgeführte Ausgabeeinheit 9 weitergeleitet. Mit Hilfe des Ampelmonitors können vier unterschiedliche Lagerzustände, nämlich Gut-Zustand (kein Schaden), kleiner bzw. beginnender Schaden, größerer Lagerschaden (größere Pittings oder freibewegliche Teilchen, auch Chips genannt) sowie großer bzw. fortgeschrittener Schaden visualisiert werden. Die Visualisierung erfolgt mit Hilfe von maximal vier Ampelsignalen, die unterschiedliche Farben, z.B. Grün, Gelb, Orange, Rot, aufweisen.

Ist die letzte Warnstufe des Lagerzustandes erreicht, soll typischer Weise die Maschine, in der sich das überwachte Lager 1 befindet, außer Betrieb genommen werden. Um ausgehend von den Ergebnissen der durchgeführten Schwingungsanalyse 12 Aussagen über den momentanen Lagerzustand machen zu können, sind entsprechende Grenzwerte 13 in der Diagnoseelektronik 8 hinterlegt. Bei Erreichen bzw. Überschreiten eines Grenzwertes 13 durch die Momentanwerte wird die Anzeige des Ampelmonitors 9 entsprechend verändert.

Erfindungsgemäß verfügt das Sensormodul 5, mit dem das Wälzlager 1 überwacht wird, zusätzlich zu einem Schwingungssensor 6 über einen Schallemissionssensor 7, der Schallemissionssignale im Bereich des Lagers 1, die aufgrund plastischer Werkstoffverformungen in diesem Bereich entstehen, aufnimmt und hierauf basierende Signale an die Diagnoseelektronik 8 überträgt. Die vom Schallemissionssensor 7 generierten und an die Diagnoseelektronik 8 übertragenen zweiten Signale werden unter Berücksichtigung der Anzahl der Impulse pro Zeit, der mittleren Amplitude der Impulse in einem Zeitintervall, der Summe aller Impulsamplituden seit Messbeginn und der Steigung der Summe aller Impulse seit Messbeginn klassifiziert und entsprechende Kennwerte 14 erzeugt. Auf der Grundlage der so gewonnenen Kennwerte 14 werden schließlich die in der Diagnoseelektronik 8 hinterlegten Grenzwerte 13 für die Schwingungsüberwachung variiert und an den aktuellen Lagerzustand und das bestehende Risiko für eine weitere Schädigung des Lagers angepasste Grenzwerte 15 erzeugt.

Werden vom Schallemissionssensor 7 keine Geräusche im Lagerbereich aufgenommen und somit auch keine Signale erzeugt, so werden die Grenzwerte 13 entsprechend angehoben, die angepassten Grenzwerte 15 sind in diesem Fall somit größer. Werden dagegen besonders häufig oder besonders starke Schallemissionssignale aufgenommen und hierauf basierende Impulse an die Diagnoseelektronik 8 übertragen, so werden die Schwingungsgrenzwerte 13 in der Diagnoseelektronik 8 herabgesetzt, die derart angepassten Grenzwerte 15 sind somit kleiner. Auf diese Weise ist es möglich, Schädigungen des Materials im Bereich des Wälzlagers 1 zu berücksichtigen und bei der Einstufung des Betriebszustandes des Lagers 1 und der damit verbundenen Einstellung des Ampelmonitors 9 zu berücksichtigen.

Ferner ist ein Netzwerk-Interface 10 vorgesehen, über die die Diagnoseelektronik 8 an ein Netzwerk angebunden ist. Über diese Verbindung ist es möglich, weitere Informationen, insbesondere Drehzahlinformationen oder Informationen über einen gefährlichen Zustand des Lagers 1 und/oder der gesamten Anlage, zu übertragen.

FIG 2 zeigt wiederum ein Wälzlager 1 mit den bereits in der Beschreibung der Figur 1 erläuterten Bauteilen. An dem Wälzlager 1 ist ein Sensormodul 5 befestigt. Wesentlich bei der in FIG 2 dargestellten Ausführungsform ist allerdings, dass die Diagnoseelektronik 8 gemeinsam mit dem Schwingungssensor 6 und dem Schallemissionssensor 7 in das Sensormodul 5 integriert ist und das Modul 5 darüber hinaus über ein Netzwerk-Interface 10 verfügt. Auf diese Weise ist es möglich, die für die Schwingungsüberwachung bei Verwendung bestimmter Verfahren zur Schwingungsanalyse benötigte Drehzahlinformation über das angekoppelte Netzwerk 11 dem Sensormodul 5 bzw. der Diagnoseelektronik 8 zur Verfügung zu stellen. Das Modul 5 gibt in diesem Falle die Signale zur Einstellung des Ampelmonitors 9 über das angekoppelte Netzwerk 11 weiter. Ebenso können weitere Kennwerte, die für die Diagnose, beispielsweise im Alarmfall, benötigt werden, über das Netzwerk-Interface 10 und das Netzwerk 11 übertragen werden.

## Patentansprüche

1. Vorrichtung zur Zustandsüberwachung eines Wälzlagers (1) mit einem Schwingungssensor (6), durch den während eines Betriebs des Lagers (1) auftretende Schwingungen detektierbar sind und in Abhängigkeit der detektierten Schwingungen ein erstes Signal generierbar ist, und mit einer Diagnoseelektronik (8), durch die unter Zugrundelegung des vom Schwingungssensor (6) generierten ersten Signals und von wenigstens einem in der Diagnoseelektronik (8) hinterlegten Grenzwert (13) eine Information über einen Lagerzustand ausgebbar ist, **dadurch gekennzeichnet, dass**
zusätzlich zum Schwingungssensor (6) ein Schallemissionssensor (7) vorgesehen ist, durch den Lagergeräusche, die bei einer wenigstens bereichsweise plastischen Verformung des Lagers (1) entstehen, aufnehmbar sind und wobei unter Berücksichtigung der aufgenommenen Geräusche ein zweites Signal an die Diagnoseelektronik (8) übertragbar ist, zu welchem Zweck der Schallemissionssensor (7) dazu ausgebildet ist, Schallemissionssignale im Bereich des Lagers, die aufgrund plastischer Werkstoffverformung in diesem Bereich entstehen, aufzunehmen und ein hierauf basierendes zweites Signal an die Diagnoseelektronik (8) zu übertragen,
wobei die Diagnoseelektronik (8) derart ausgeführt ist, dass der hinterlegte Grenzwert (13) unter Berücksichtigung des empfangenen zweiten Signals veränderbar ist und somit die Ausgabe der Information über den Lagerzustand in Abhängigkeit der vom Schallemissionssensor (7) aufgenommenen Lagergeräusche erfolgt,
wobei der Schallemissionssensor (7) ab einer Frequenz von 80 kHz besonders empfindlich ist.

2. Vorrichtung nach Anspruch 1, **dadurch gekennzeichnet, dass** der Schallemissionssensor (7) ein piezoelektrischer Sensor oder ein Sensor mit einem mikro-elektrisch-mechanischen System (MEMS) ist.

3. Vorrichtung nach einem der Ansprüche 1 bis 2, **dadurch gekennzeichnet, dass** der Schallemissionssensor (7) in einem Frequenzbereich von 100 bis 130 kHz besonders empfindlich ist.

4. Vorrichtung nach einem der Ansprüche 1 bis 3, **dadurch gekennzeichnet, dass** die Diagnoseelektronik (8) derart ausgeführt ist, dass die empfangenen zweiten Signale hinsichtlich ihrer Amplitude und/oder Häufigkeit pro Zeitintervall klassifiziert werden und basierend hierauf ein Kennwert (14) generierbar ist.

5. Vorrichtung nach einem der Ansprüche 1 bis 4, **dadurch gekennzeichnet, dass** durch die Diagnoseelektronik (8) wenigstens drei oder maximal vier unterschiedliche Lagerzustände ermittelbar und ausgebbar sind, wobei die zu unterscheidenden Zustände ein Gutzustand, ein beginnender Schaden, ein größerer Lagerschaden und ein großer Schaden sind.

6. Vorrichtung nach einem der Ansprüche 1 bis 5,
**dadurch gekennzeichnet, dass**
der Schallemissionssensor und der Schwingungssensor in einem gemeinsamen Gehäuse ausgebildet sind.

7. Verfahren zur Schwingungsüberwachung eines Wälzlagers (1), bei mit einem Schwingungssensor (6) während eines Betriebs des Lagers (1) auftretende Schwingungen detektiert werden und in Abhängigkeit der detektierten Schwingungen ein erstes Signal generiert und an eine Diagnoseelektronik (8) übertragen wird, in der unter Zugrundelegung des vom Schwingungssensor (6) generierten ersten Signals und wenigstens eines in der Diagnoseelektronik (8) hinterlegten Grenzwerts (13) eine Information über einen Lagerzustand ermittelt und ausgegeben wird, **dadurch gekennzeichnet, dass**
zusätzlich mit einem Schallemissionssensor (7) Lagergeräusche, die bei einer wenigstens bereichsweise plastischen Verformung des Lagers (1) entstehen, aufgenommen werden und dass unter Berücksichtigung der aufgenommenen Geräusche ein zweites Signal generiert und an die Diagnoseelektronik (8) übertragen wird, indem mittels des Schallemissionssensors (7) Schallemissionssignale im Bereich des Lagers, die aufgrund plastischer Werkstoffverformung in diesem Bereich entstehen, aufgenommen werden und ein hierauf basierendes zweites Signal an die Diagnoseelektronik (8) übertragen wird, wobei mittels der Diagnoseelektronik (8) der hinterlegte Grenzwert (13) unter Berücksichtigung des empfangenen zweiten Signals verändert wird und somit die Ausgabe der Information über den Lagerzustand in Abhängigkeit der vom Schallemissionssensor (7) aufgenommenen Lagergeräusche erfolgt,
wobei der Schallemissionssensor (7) ab einer Frequenz von 80 kHz besonders empfindlich ist.

8. Verfahren nach Anspruch 7, **dadurch gekennzeichnet, dass** die empfangenen zweiten Signale in der Diagnoseelektronik (8) entsprechend ihrer Amplitude und/oder ihres Auftretens pro Zeitintervall klassifiziert und auf der Basis der Klassifizierung wenigstens ein Kennwert (14) ermittelt wird.

9. Verfahren nach Anspruch 7 oder 8, **dadurch gekennzeichnet, dass** die empfangenen zweiten Signale in der Diagnoseelektronik (8) unter Berücksichtigung einer Anzahl von Impulsen pro Zeitintervall, einer mittleren Amplitude der Impulse pro Zeitintervall, einer Summe der Impulsamplituden seit eines Startpunkts einer Messung und/oder einer Steigung der Summe der Impulsamplituden seit eines Startpunkts einer Messung klassifiziert werden und basierend hierauf ein Kennwert (14) erzeugt wird.

## Claims

1. Apparatus for monitoring the state of a roller bearing (1) having a vibration sensor (6), it being possible to detect vibrations which occur during operation of the bearing (1) using said vibration sensor and it being possible to generate a first signal as a function of the detected vibrations, and having a diagnosis electronics system (8) which can output an item of information about a state of the bearing on the basis of the first signal, which is generated by the vibration sensor (6), and of at least one limit value (13), which is stored in the diagnosis electronics system (8), **characterized in that**,
in addition to the vibration sensor (6), a sound emission sensor (7) is provided, it being possible for noises which are produced in the event of plastic deformation of the bearing (1) at least in regions to be picked up by said sound emission sensor, and wherein a second signal can be transmitted to the diagnosis electronics system (8) taking into account the picked-up noises, for which purpose the sound emission sensor (7) is designed to pick up sound emission signals in the region of the bearing, which signals are produced in this region on account of plastic material deformation, and to transmit a second signal which is based on this to the diagnosis electronics system (8), wherein the diagnosis electronics system (8) is designed in such a way that the stored limit value (13) can be changed taking into account the received second signal, and therefore the item of information about the state of the bearing is output as a function of the noises which are produced by the bearing and picked up by the sound emission sensor (7), wherein the sound emission sensor (7) is particularly sensitive starting from a frequency of 80kHz.

2. Apparatus according to Claim 1, **characterized in that** the sound emission sensor (7) is a piezoelectric sensor or a sensor with a micro-electro-mechanical system (MEMS).

3. Apparatus according to one of Claims 1 to 2, **characterized in that** the sound emission sensor (7) is particularly sensitive in a frequency range of from 100 to 130 kHz.

4. Apparatus according to one of Claims 1 to 3, **characterized in that** the diagnosis electronics system (8) is designed in such a way that the received second signals are classified in respect of their amplitude and/or frequency per time interval, and a characteristic value (14) can be generated on the basis of this.

5. Apparatus according to one of Claims 1 to 4, **characterized in that** at least three or at most four different states of a bearing can be ascertained and can be output by the diagnosis electronics system (8), wherein the states between which a distinction is to be made are a good state, incipient damage, relatively severe damage to the bearing and severe damage.

6. Apparatus according to one of Claims 1 to 5, **characterized in that** the sound emission sensor and the vibration sensor are formed in a common housing.

7. Method for monitoring vibration of a roller bearing (1), in which method vibrations which occur during operation of the bearing (1) are detected by a vibration sensor (6) and a first signal is generated as a function of the detected vibrations and transmitted to a diagnosis electronics system (8) in which an item of information about a state of the bearing is ascertained and output on the basis of the first signal, which is generated by the vibration sensor (6), and of at least one limit value (13), which is stored in the diagnosis electronics system (8), **characterized in that**
noises which are produced in the event of plastic deformation of the bearing (1) at least in regions are additionally picked up by a sound emission sensor (7), and **in that** a second signal is generated and transmitted to the diagnosis electronics system (8) taking into account the picked-up noises
by way of sound emission signals in the region of the bearing, which signals are produced in this region on account of plastic material deformation, being picked up and a second signal which is based on this to the diagnosis electronics system (8) being transmitted by means of the sound emission sensor (7), wherein the stored limit value (13) is changed by means of the diagnosis electronics system (8) taking into account the received second signal and therefore the item of information about the state of the bearing is output as a function of the noises which are produced by the bearing and picked up by the sound emission sensor (7),
wherein the sound emission sensor (7) is particularly sensitive starting from a frequency of 80 kHz.

8. Method according to Claim 7, **characterized in that** the received second signals are classified in accordance with their amplitude and/or their occurrence per time interval in the diagnosis electronics system (8), and at least one characteristic value (14) is ascertained on the basis of the classification.

9. Method according to Claim 7 or 8, **characterized in that** the received second signals are classified in the diagnosis electronics system (8) taking into account a number of pulses per time interval, an average amplitude of the pulses per time interval, a sum of the pulse amplitudes since a start point of a measurement operation and/or an increase in the sum of the pulse amplitudes since a start point of a measurement operation, and a characteristic value (14) is generated on the basis of this.

## Revendications

1. Dispositif pour la surveillance de l'état d'un palier à rouleaux (1) comprenant un capteur d'oscillations (6) par lequel des oscillations qui apparaissent au cours d'un fonctionnement du palier (1) peuvent être détectées et un premier signal peut être généré en fonction des oscillations détectées, et comprenant une électronique de diagnostic (8) par laquelle, en se basant sur le premier signal généré par le capteur d'oscillations (6) et à partir d'au moins une valeur limite (13) déposée dans l'électronique de diagnostic (8), une information peut être émise concernant un état du palier, **caractérisé en ce qu'**on prévoit, en plus du capteur d'oscillations (6), un capteur d'émissions acoustiques (7) par lequel on peut enregistrer les bruits du palier qui surviennent lors d'une déformation plastique au moins partielle du palier (1), et dans lequel, en se référant aux bruits enregistrés, un second signal peut être transféré à l'électronique de diagnostic (8), le capteur d'émissions acoustiques (7) étant réalisé à cette fin pour enregistrer des signaux d'émissions acoustiques dans la zone du palier, qui apparaissent dans cette zone sur base d'une déformation plastique matérielle et pour transférer un second signal basé sur les premiers cités à l'électronique de diagnostic (8) ; dans lequel l'électronique de diagnostic (8) est réalisée d'une manière telle que la valeur limite déposée (13) peut être modifiée en prenant en compte le deuxième signal reçu et ainsi l'émission de l'information concernant l'état du palier a lieu en fonction des bruits de palier enregistrés par le capteur d'émissions acoustiques (7) ; dans lequel le capteur d'émissions acoustiques (7) est particulièrement sensible à partir d'une fréquence de 80 kHz.

2. Dispositif selon la revendication 1, **caractérisé en ce que** le capteur d'émissions acoustiques (7) représente un capteur piézoélectrique ou un capteur comprenant un microsystème électromécanique (MEMS).

3. Dispositif selon l'une quelconque des revendications 1 à 2, **caractérisé en ce que** le capteur d'émissions acoustiques (7) est particulièrement sensible dans une gamme de fréquences de 100 à 130 kHz.

4. Dispositif selon l'une quelconque des revendications 1 à 3, **caractérisé en ce que** l'électronique de diagnostic (8) est réalisée d'une manière telle que les seconds signaux reçus sont classés en ce qui concerne leur amplitude et/ou leur fréquence par intervalle de temps et une valeur caractéristique (14) peut être générée en se basant sur ladite classification.

5. Dispositif selon l'une quelconque des revendications 1 à 4, **caractérisé en ce que**, par l'intermédiaire de l'électronique de diagnostic (8), on peut déterminer et émettre au moins trois ou au maximum quatre états de paliers différents ; dans lequel les états à distinguer représentent un état correct, une dégradation naissante, une dégradation plus importante du palier et une dégradation sérieuse.

6. Dispositif selon l'une quelconque des revendications 1 à 5, **caractérisé en ce que** le capteur d'émissions acoustiques et le capteur d'oscillations sont réalisés dans un boîtier commun.

7. Procédé pour la surveillance d'oscillations d'un palier à rouleaux (1), dans lequel des oscillations qui apparaissent au cours d'un fonctionnement du palier (1) sont détectées avec un capteur d'oscillations (6) et, en fonction des oscillations détectées, un premier signal est généré et est transféré à une électronique de diagnostic (8) dans laquelle, grâce au dépôt du premier signal généré par le capteur d'oscillations (6) et à au moins une valeur limite (13) déposée dans l'électronique de diagnostic (8), on détermine et on émet une information concernant un état du palier, **caractérisé en ce qu'**on enregistre en outre avec un capteur d'émissions acoustiques (7) des bruits de palier qui apparaissent lors d'une déformation plastique au moins partielle du palier (1), et **en ce que**, en se basant sur les bruits enregistrés, on génère un second signal et on le transfère à l'électronique de diagnostic (8) ; dans lequel, au moyen du capteur d'émissions acoustiques (7), on enregistre des signaux d'émissions acoustiques dans la zone du palier qui apparaissent sur base d'une déformation plastique matérielle dans cette zone et on transfère à l'électronique de diagnostic (8) un second signal qui se base sur les premiers cités ; dans lequel, au moyen de l'électronique de diagnostic (8), on modifie la valeur limite déposée (13) en prenant en compte le second signal reçu, si bien que l'émission de l'information concernant l'état du palier a lieu en fonction des bruits de palier enregistrés par le capteur d'émissions acoustiques (7) ; dans lequel le capteur d'émissions acoustiques (7) est particulièrement sensible à partir d'une fréquence de 80 kHz.

8. Procédé selon la revendication 7, **caractérisé en ce que** les seconds signaux reçus sont classés dans l'électronique de diagnostic (8) de manière correspondante à leur amplitude et/ou à leur apparition par intervalle de temps et, sur base de la classification, on détermine au moins une valeur caractéristique (14).

9. Procédé selon la revendication 7 ou 8, **caractérisé en ce que** les seconds signaux reçus dans l'électronique de diagnostic (8) sont classés en prenant en compte un nombre d'impulsions par intervalle de temps, une amplitude moyenne des impulsions par intervalle de temps, une somme des amplitudes d'impulsions depuis un point de départ d'une mesure et/ou une augmentation de la somme des amplitudes des impulsions depuis un point de départ d'une mesure, et en se basant sur les éléments précités, on génère une valeur caractéristique (14).
